# EUROPEAN PATENT APPLICATION

(11) **EP 1 987 986 A2**
(43) Date of publication of application: **05.11.2008**
(21) Application number: 08154268.0
(22) Date of filing: 09.04.2008
(51) Int. Cl.: B60R 1/12, H04R 1/00, B60R 11/02

(54) **Vehicle external speaker and communication system**

(30) Priority: 03.05.2007 US 799998
(71) Applicant: Delphi Technologies, Inc., Troy, Michigan 48007 (US)
(72) Inventor: Snider, Chris R., Noblesville, IN 46062 (US); Marrah, Jeffrey J., Kokomo, IN 46901 (US)
(74) Representative: Denton, Michael John

(57) **Abstract**

A communication assembly is provided for a vehicle (10) to communicate audio sound inside and outside the vehicle (10). The communication assembly includes a housing such as an exterior rearview mirror housing (22). The housing (22) has a sound port in communication with an outside environment external to the vehicle (10). The sound communication assembly also includes an audio speaker (30) and microphone (34) located in the housing (22) in audio communication with the sound port (24). The audio speaker (30) is operable to provide audio sound to the outside environment external to the vehicle (10). The communication assembly further includes a communication link (28) coupled to the audio speaker (30) and microphone (34) for providing signals to the audio speaker (30) and microphone (34) to broadcast audio sound to the outside environment.

## Description

### Technical Field

The present invention generally relates to vehicle audio communications and, more particularly, relates to a vehicle communication assembly that enables sound communication with the external environment outside of the vehicle.

### Background of the Invention

Automotive passenger vehicles generally include a body, a chassis and a power train for driving the wheels. The vehicle body generally defines an enclosed passenger compartment for accommodating one or more passengers. Located within the body are various electronic systems, such as telematics and infotainment systems and devices. Some telematic systems employ communication systems that include a microphone for capturing driver input commands and one or more speakers for providing audio sound, generally within the passenger compartment.

Vehicles are increasingly being equipped with entertainment systems and devices that provide audio and video media in the mobile setting. Vehicles are commonly equipped with a variety of video displays, audio receivers and speakers within the passenger compartment to provide mobile enjoyment of movies, television, radio and recorded programs, to name a few. The car audio speakers typically employed within the passenger compartment of the vehicle provide audio sound within the vehicle, while a microphone may be employed to pickup driver spoken commands, such as for use in a navigation system or telephone system.

While various telematics and infotainment systems and devices are available for use within the vehicle passenger compartment, users may find it advantageous to expand such use outside of the vehicle. For example, a consumer may desire to utilize the vehicle radio as an entertainment source for use in the environment outside the passenger compartment. Additionally, a passenger within the vehicle may desire to communicate with a person outside of the vehicle such as when ordering food at a drive up ordering window at a restaurant. In order to do so, the vehicle consumer may roll down the window or open a door. However, this may pose a risk for vehicle security and subject the passenger compartment to adverse environmental conditions like rainy weather and insects.

Accordingly, it is therefore desirable to provide for a communication system that enables passengers within a vehicle to communicate with the outside environment. In particular, it is desirable to provide for a communication system that enables a vehicle passenger to provide audio sound from within the vehicle to the outside environment in a manner that is easy to use, cost-effective and poses a lessened threat to security and exposure to undesirable environmental conditions outside the vehicle. It is further desired to provide a communication system that enables a vehicle passenger to effectively receive sound from outside the vehicle.

### Summary of the Invention

In accordance with the teachings of the present invention, a communication assembly is provided for use on a vehicle to communicate audio sound in an environment outside the vehicle passenger compartment. According to one aspect of the present invention, the communication assembly includes a housing adapted to be mounted on a vehicle, the housing having a sound port in communication with an outside environment external to the vehicle. The assembly also includes an audio speaker located in the housing in audio communication with the sound port. The audio speaker is operable to provide audio sound to the outside environment external to the vehicle. The communication assembly further includes a communication link coupled to the audio speaker for providing signals to the audio speaker to broadcast audio sound to the outside environment.

According to another aspect of the present invention, a vehicle is provided having a communication assembly integrated into an external rearview mirror of the vehicle. The vehicle includes a body defining a passenger compartment within the interior of the vehicle, and an exterior rearview mirror assembly located on an exterior side of the body. The exterior rearview mirror assembly includes a rearview mirror, walls defining a housing, and a sound port formed in the housing in communication with an outside environment external to the vehicle. The vehicle has an audio speaker located in the exterior rearview mirror assembly in audio communication with the sound port. The audio speaker is operable to provide audio sound to the outside environment external to the vehicle. The vehicle further has a communication link coupled to the audio speaker for providing signals to the audio speaker to broadcast audio sound to the outside environment.

Accordingly, the communication assembly and vehicle of the present invention advantageously provide for communication between the passenger compartment of the vehicle and the surrounding outside environment. The communication assembly is easy to use, affordable and reduces risk to security and adverse environmental conditions by lessening the exposure of the vehicle passenger compartment to the outside environment.

These and other features, advantages and objects of the present invention will be further understood and appreciated by those skilled in the art by reference to the following specification, claims and appended drawings.

### Brief Description of the Drawings

The present invention will now be described, by way of example, with reference to the accompanying drawings, in which:
FIG. 1 is a view of a vehicle having an exterior rearview mirror assembly equipped with a communication assembly, according to one embodiment of the present invention;
FIG. 2 is an enlarged view of the exterior rearview mirror assembly equipped with the communication assembly, according to a first embodiment of the present invention;
FIG. 3 is an exploded view of the exterior rearview mirror assembly illustrating the speaker and microphone arrangement, according to a second embodiment;
FIG. 4 is an enlarged view of the exterior rearview mirror assembly further illustrating user interface controls and internal microphone and speaker within the vehicle passenger compartment;
FIG. 5 is a front view of a car radio illustrating user interface controls for controlling the speakers and microphones, according to one embodiment;
FIG. 6 is a perspective view of the mirror assembly having a movable speaker assembly coupled to the mirror housing, according to a third embodiment;
FIG. 7 is a perspective view of the mirror assembly showing the speaker assembly rotated relative to the mirror housing, according to the embodiment of FIG. 6;
FIG. 8 is an exploded view of the rearview mirror and speaker and microphone assembly shown in FIG. 7;
FIG. 9 is a cross-sectional of the assembly shown in FIG. 6 taken through line IX-IX;
FIG. 10 is an enlarged view of a folding rearview mirror assembly equipped with a communication assembly, according to a fourth embodiment; and
FIG. 11 is a block diagram illustrating signal processing circuitry employed by the communication assembly, according to one embodiment.

### Description of the Preferred Embodiments

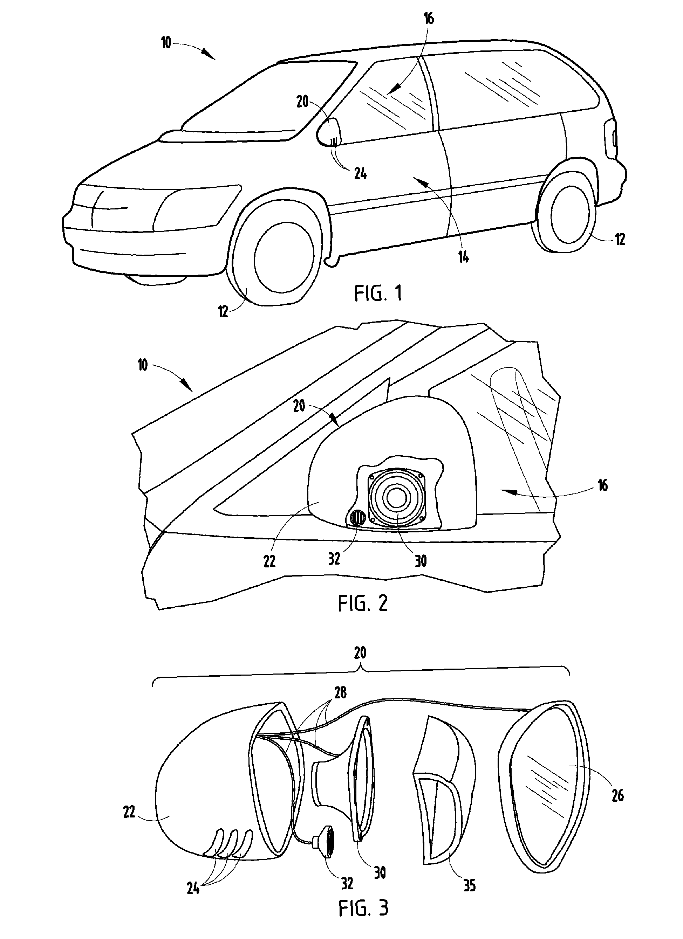

Referring to FIG. 1, a vehicle 10 is generally illustrated employing a communication assembly integrated in an exterior rearview mirror assembly 20, according to one embodiment of the present invention. The communication assembly enables communication between the inside (interior) and outside (exterior) environments of the vehicle 10. The vehicle 10 generally includes a body 14, a chassis and a power train driving the road wheels 12 to move the vehicle 10. The body 14 generally includes side panels, doors, windows and a roof that generally define an enclosed cabin referred to as the passenger compartment 16 of the vehicle 10. The passenger compartment 16 generally contains seating accommodations for the driver and other passengers, in addition to various vehicle controls. The exterior rearview mirror assembly 20 is located outside of the passenger compartment on the exterior side of the vehicle body 14.

Located within the passenger compartment 16 are various electronics systems and devices, such as an infotainment and telematics systems. The infotainment and telematics systems may include: an automotive personal computing device, a web browser, an Internet access device, a satellite communication system, a mobile multimedia system, a radio, a television, a DVD player, a video game player, a navigation system, a phone/address book lookup system, a rear or side obstruction system, a vehicle information and control system, and other types of electronic devices and systems.

Referring to FIG. 2, the rearview mirror assembly 20 is further illustrated equipped with components of the communication assembly that include an external speaker 30 and an external microphone 32 according to a first embodiment. The exterior rearview mirror assembly 20 includes a mirror case shroud or housing 22 generally defined by walls and a rearview mirror which surround an enclosure. Disposed within the enclosure are the exterior (external) speaker 30 and microphone 32, generally in audio communication with one or more sound ports 24 in a housing wall. The sound ports 24 are shown as three porting slots in communication with the outside environment external to the vehicle 10 to allow sound to travel from the exterior speaker 30 to the outside environment and from the outside environment to the exterior microphone 32. Any of a number of size and shaped sound ports 24 may be employed. In the embodiment shown in FIG. 2, the speaker 30 and microphone 32 are aligned with the three slot sound ports 24 so that sound may easily be passed directly therethrough.

Referring to FIG. 3, the exterior rearview mirror assembly 20 is shown having components of the communication assembly assembled according to a second embodiment of the present invention. The mirror assembly 20 in FIG. 3 employs an exterior speaker 30 and microphone 32 disposed within the mirror housing 22 aligned with the rearview mirror 26. The exterior speaker 30 and microphone 32 are arranged in a direction facing the backside of the mirror 26, but at a location behind a sound channel 35. The sound channel 35 channels or redirects sound waves that are generally traveling towards the rear side of the mirror 26 in a lateral direction outward such that the sound passes through sound ports 24.

The communication assembly further includes a communication link coupled to the various electrical components for providing signal communication. In the embodiment shown, the communication link includes electrical wires 28 that may be integrated in the mirror wiring harness. The communication link 28 includes wiring coupled to the exterior audio speaker 30 for providing electrical signals to the speaker 30 to broadcast audio sound to the outside environment. The communication link 28 may also include wiring to communicate signals from the exterior microphone 32. The communication link 28 may include other signal communication mediums including wireless communication, such as Bluetooth.

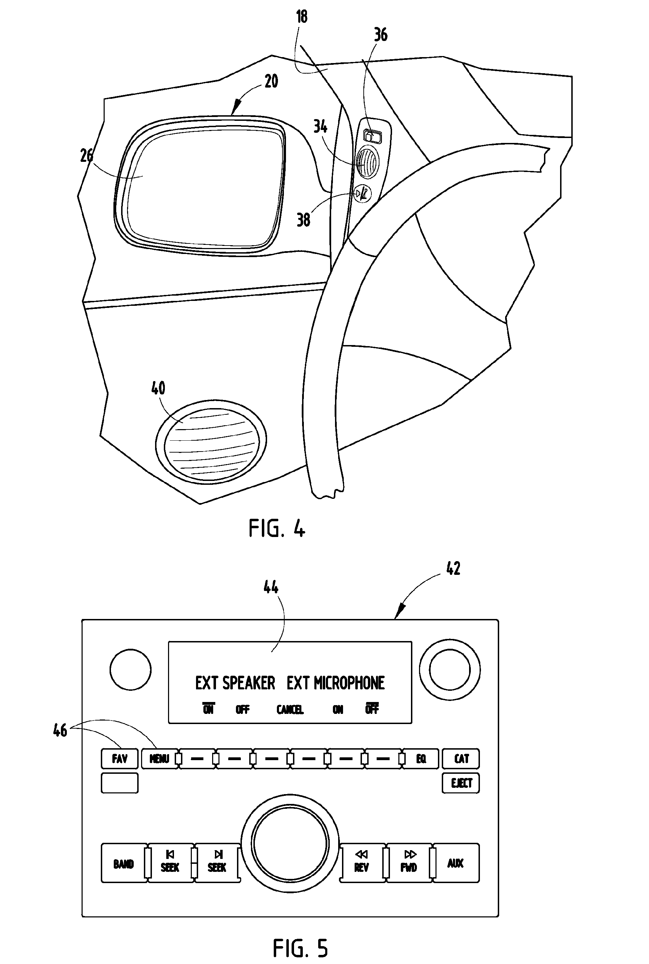

Referring to FIG. 4, an interior speaker 40 and interior microphone 34 are shown located within the passenger compartment 16 of the vehicle 10. Interior speaker 40 may include one or more audio speakers as are generally known to be employed on a vehicle, such as for a sound system. The interior microphone 34 is shown mounted in the passenger compartment 16 in the vicinity of the A-pillar, but could be located elsewhere within the vehicle 10. Also located near the A-pillar is an external/internal control select switch 36 that allows a passenger, such as the driver of the vehicle 10, to select the inside (interior) mode or the outside (exterior) mode. For a stand-alone communication assembly, the interior and exterior microphones could be easily controlled with the select switch 36. An activation pushbutton switch is further shown in the vehicle passenger compartment to allow a passenger to select activation of the speaker or microphone. Accordingly, an operator of the communication assembly may select activation of either the external or internal modes via switch 36 and may activate the corresponding speaker or microphone via switch 38. The interior speaker 40, microphone 34, and control switches 36 and 38 may also be coupled to the communication link 28 to communicate input and control signals.

In FIG. 5, communication assembly controls are further shown integrated into a vehicle radio 42. With the communication assembly controls incorporated into an existing audio radio or other telematics or infotainment system, the control and display function(s) could be incorporated into the radio through a source select pushbutton already on the radio. The radio display 44 may display information like external or internal mode for the speakers and microphones. With an outside (exterior) rearview mirror that has an integral turn signal, the turn signal element could be lit in a non-flashing mode to indicate the system is on. The selection of the exterior speaker function in the radio could be through the menu pushbutton with soft key pushbutton options. A cancel function could be enabled with an override through selecting other pushbuttons like band or CD/auxiliary pushbuttons, or a soft key cancel could be identified with the display. As seen, radio 42 has the display 44 and human machine interface (HMI) input controls (e.g., pushbuttons) 46. The driver of the vehicle 10 is able to select between the internal and external microphones and speakers by manipulating the input controls 46. The radio display 44 displays which microphones and speakers are turned on and off.

By installing a speaker 30 and microphone 32 in the outside rearview mirror assembly 20, the communication assembly allows vehicle occupant(s) to communicate with one or more persons outside of the vehicle without having to roll down the window or open a door of the vehicle 10. It should be appreciated that the outside exterior microphone 32 and inside internal microphone 34 can be connected to the vehicle radio for amplification or may include independent amplifiers. It should also be appreciated that the interior microphone 34 could be part of an existing telematics system, or a separate unit located within range of the vehicle occupant's voice. The activation of the exterior speaker 30 could be via a pushbutton integral to an existing telematics or audio system for a stand-alone unit, or may be located elsewhere such as in the steering wheel control buttons of the vehicle 10.

To address any problems related to poor audio quality, such as may exist in the external environment, such as at a drive-up service window, the vehicle exterior speaker 30 and microphone 32 may employ noise reduction signal processing circuitry. Conventional signal processing circuitry may be employed to optimize voice communications, equalize frequency response of the drive-up window speaker system, and cancel out engine or motor noise from the vehicle 10. Echo cancellation could also be employed to eliminate feedback resulting from the close proximity of the exterior microphone 32 and speaker 30 or the interior microphone 34 and speaker 40.

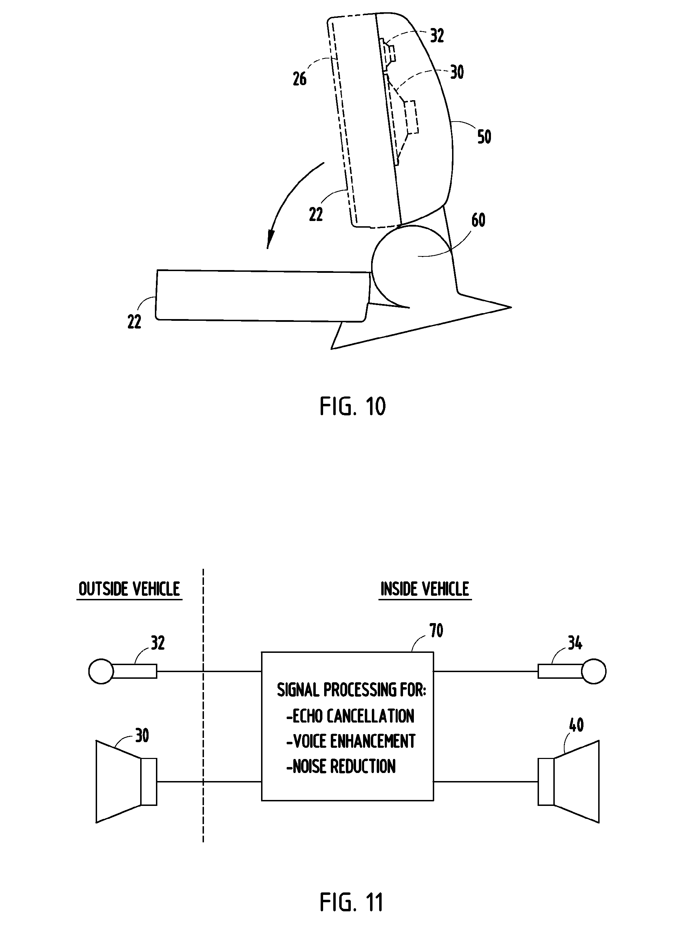

The signal processing circuitry 70 is illustrated in FIG. 11 coupled to the pair of outside (exterior) microphone 32 and speaker 30 and the pair of inside (interior) microphone 34 and speaker 40. The signal processing circuitry 70 may be implemented as analog circuitry or may include software executed by digital circuitry, such as a processor. The signal processing circuitry 70 provides echo cancellation, voice enhancement, and noise reduction, according to one embodiment. It should be appreciated that inherent data may be made available relevant to the car engine that would allow for cancellation of the engine noise to provide enhanced performance.

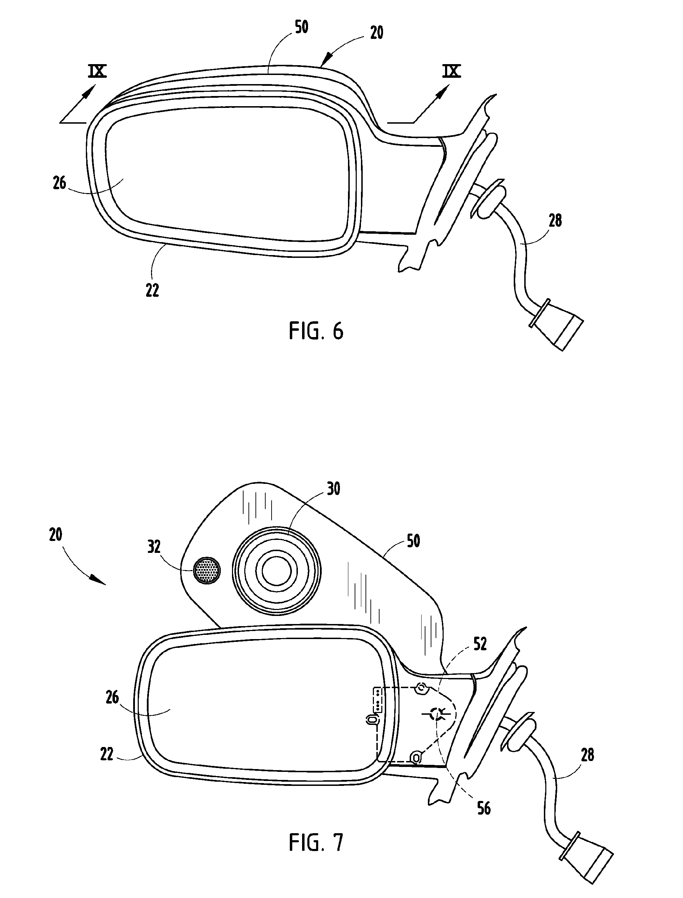

Referring to FIGS. 6 and 7, an exterior rearview mirror assembly is illustrated having a communication assembly according to a third embodiment of the present invention. The communication assembly seen in FIGS. 6 and 7 includes an external speaker 30 and microphone 32 assembled to a housing 50 that moves relative to the rearview mirror housing 22. The communication assembly is shown in FIG. 6 in an undeployed and inoperable position stowed behind the exterior rearview mirror assembly housing 22. To activate the communication assembly the external speaker 30 and microphone 32 are moved relative to the mirror housing 22 by rotating housing 50 clockwise to a deployed position as seen in FIG. 7. In doing so, the housing assembly 50 is rotated via a flat pack motor 52 relative to the mirror housing 22 so that the exterior speaker 30 and microphone 34 extend upward above the mirror housing 22.

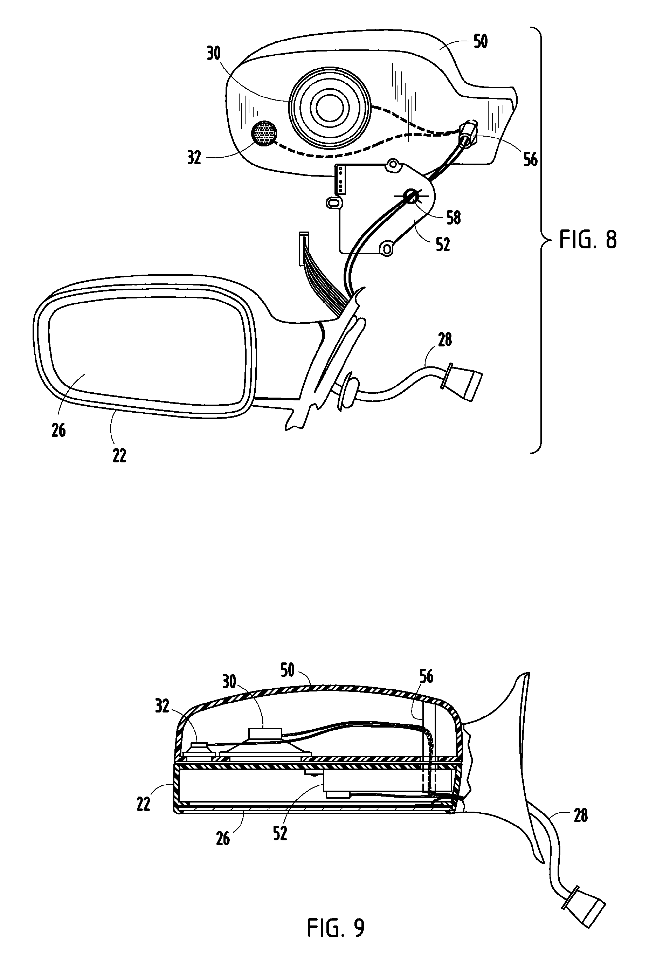

As further seen in FIGS. 8 and 9, the flat pack motor 52 has a drive receptacle 58 that engages flat portions of a hollow shaft 56 that is connected to housing 50 such that the motor 52 rotates assembly 50 relative to the mirror housing 22. The communication assembly 50 may be rotated clockwise about the pivot joint provided by shaft 56, such that the exterior speaker 30 and microphone 32 become exposed to the outside environment at a location above the mirror housing 22. When the exterior speaker 30 and microphone 32 are deactivated, the communication housing 50 is rotated counterclockwise back into a stowed position behind mirror housing 22 which results in a conformal rearview mirror/communication assembly.

The external speaker 30 and mirror housing 22 can be moved using a small motor such a flat pack style electric motor commercially available from CEI Company. Such a motor is known for use to rotate HVAC system doors and flaps on vehicles. The flat pack motor can provide capability to rotate the speaker/microphone housing assembly and to position the speaker and microphone for unimpeded sound travel. With the motor control, the speakers can be automated for selection with the vehicle audio system such that selecting the exterior speaker 30 and/or microphone 32 activates the motor 52 to rotate the housing 50 into position. Also, the motor 52 would return the communication housing 50 when the external speaker and microphone functions are deactivated or when the audio system is turned off. Additionally, the housing 50 may automatically be returned to the closed position and deactivate the exterior speaker 30 and microphone 32 when rain or other adverse environmental conditions are sensed.

The exterior speaker 30 and microphone 32 and the flat pack motor 52 are coupled to the rearview mirror wiring harness 28 that extends through the body 14 of the vehicle 10. The wiring harness 28 may also include wiring connected to heating element(s) for defrosting of the rearview mirror, wiring for turn signal indicators, wiring for a satellite digital radio service antenna, and other electronic devices that may be located within or on the external rearview mirror assembly 20.

According to an alternative embodiment, in lieu of a motor 52, it should be appreciated that the housing 50 containing the exterior speaker 30 and microphone 32 may be moved relative to the mirror housing 22 by employing a manual operated mechanical assembly. For example, a simple release catch could be used with a spring assisted lever to raise the speaker and microphone housing 50 into position and controlled by a cable that is activated by an operator within the vehicle, similar to a conventional fuel filler door release. With a motor activated embodiment, the motor could be controlled through the audio system or could be controlled via other sources, such as a key fob.

Referring to FIG. 10, an exterior rearview mirror assembly is illustrated having a communication assembly according to a fourth embodiment of the present invention. In this embodiment, the rearview mirror housing 20 is rotated to fold inward from its normal use position towards the body 14 of the vehicle 10 so as to expose the exterior speaker 30 and microphone 32 mounted to communication housing 50. The mirror housing 22 may be rotated by almost ninety degrees (90°) from the position shown in dashed lines to the folded position shown in solid lines using a motor, such as is employed in a conventional folding exterior mirror assembly on vehicles. When the communication system is deactivated, the mirror housing 22 may be rotated back outward to its normal position to cover the exterior speaker 30 and microphone 32. The mirror housing 22 is moved by an electric motor 60, according to one embodiment. Alternately, a mechanical activated assembly could be employed to move housing 22.

The exterior speaker 30 and microphone 32 may be utilized to provide a variety of enhanced audio features. For example, the exterior speaker 30 and microphone 32 may be useful for an intercom system, tailgating, or otherwise allowing owners of vehicles to enjoy a sound system while located outside of the vehicle 10. With a Bluetooth connection or an auxiliary jack, a phone ringer could be set to ring through the exterior speaker 30 to alert someone outside the vehicle 10, while the phone remains secure in the vehicle 10. Additionally, the external speaker 30 can allow those with a soft or weak voice to be better heard. The communication assembly also allows communication from the vehicle occupant to one or more persons outside the vehicle while maintaining security and preventing subjecting the occupants to adverse weather conditions. The exterior speaker system can also serve to provide additional warning for a vehicle security system. In conjunction with various security sensors, the speaker system could allow a telematics call center to deliver a warning message to possible vandals or crooks such as "step away from the vehicle, the police are on their way," for example.

By providing both internal and external speakers and microphones, the communication assembly further provides for an intercom system that may be incorporated into the car radio system to allow the vehicle occupant(s) to control the volume of the external vehicle sound and to use the radio amplification. With the communication assembly of the present invention, drive-up window patrons that usually are exposed to the elements at an ordering station are able to place an order without having to roll down the vehicle window.

Accordingly, the communication assembly of the present invention advantageously allows for enjoyment of audio sound in an outside environment external to the passenger compartment 16 of a vehicle 10. The communication system allows for enhanced sound communication in a manner that minimizes exposure to adverse environmental conditions outside of the vehicle and enhances security to passengers within the vehicle 10.

It will be understood by those who practice the invention and those skilled in the art, that various modifications and improvements may be made to the invention without departing from the spirit of the disclosed concept. The scope of protection afforded is to be determined by the claims and by the breadth of interpretation allowed by law.

## Claims

1. A communication assembly for a vehicle (10) for communicating audio sound in an environment outside of the passenger compartment (16), said communication system comprising:
a housing (22) adapted to be mounted on a vehicle (10), said housing comprising a sound port (24) in communication with an outside environment external to the vehicle (10);
an audio speaker (30) located in the housing (22) in audio communication with the sound port, said audio speaker (30) operable to provide audio sound to the outside environment external to the vehicle (10); and
a communication link (28) coupled to the audio speaker (30) for providing signals to the audio speaker (30) to broadcast audio sound to the outside environment.

2. The communication assembly as defined in claim 1, wherein the housing comprises an exterior rearview mirror housing (22) of a vehicle (10).

3. The communication assembly as defined in claim 2, wherein the audio speaker (30) is substantially located behind a rearview mirror (26) within walls of the rearview mirror housing (22), wherein the sound port comprises one or more openings in a wall of the rearview mirror housing (22).

4. The communication assembly as defined in claim 2, wherein the audio speaker (30) is mounted to a member (50) that moves relative to the rearview mirror housing (22).

5. The communication assembly as defined in claim 4 further comprising a motor (52), wherein the motor (52) is actuated to move the audio speaker (30) relative to the rearview mirror housing (22).

6. The communication assembly as defined in claim 1, wherein the communication assembly further comprises a microphone (32) in communication with the outside environment external to the vehicle (10) for capturing sound in the outside environment.

7. The communication assembly as defined in claim 6 further comprising at least one interior speaker (40) adapted to be located within the passenger compartment (16) of the vehicle (10) to present audio sound in the passenger compartment (16) captured by the microphone (32).

8. The communication assembly as defined in claim 6 further comprising signal processing circuitry (70) coupled to the microphone (32) and the audio speaker (30).

9. The communication assembly as defined in claim 1 further comprising a control mechanism (36, 38) for controlling activation of the communication system, wherein the activation mechanism includes an operator selected input (36 or 38).

10. The communication assembly as defined in claim 1 further comprising an interior microphone (34) adapted to be located within the vehicle (10), wherein the interior microphone (34) allows an operator to present audio sound to the outside environment via the audio speaker (30).
